# DEMANDE DE BREVET EUROPEEN

(11) **EP 1 073 232 A1**
(43) Date de publication de la demande: **31.01.2001**
(21) Numéro de dépôt: 00202572.4
(22) Date de dépôt: 18.07.2000
(51) Int. Cl.: H04L 5/18, H04L 5/16, H04L 25/02

(54) **Interface bidirectionelle**

(30) Priorité: 27.07.1999 FR 9909733
(71) Demandeur: Koninklijke Philips Electronics N.V., 5621 BA Eindhoven (NL)
(72) Inventeur: Maugars, Philippe, 75008 Paris (FR); Declercq, Christophe, 75008 Paris (FR)
(74) Mandataire: Chaffraix, Jean

(57) **Abrégé**

L'invention concerne un dispositif de transmission de données entre deux lignes distinctes. Ce dispositif comprend un terminal réel (TRA, TRB) et un terminal virtuel (TVA, TVB) associés à chacune des lignes. L'état d'un terminal réel est celui de la ligne associée. L'état d'un terminal virtuel indique si la ligne associée est émettrice ou à même de recevoir une donnée. Chaque terminal réel, associé à une ligne, contrôle par un signal de commande (COM) l'état du terminal virtuel associé à l'autre ligne qui, lui même, contrôle l'état du terminal réel associé (CTRL) et donc de la ligne. Un terminal virtuel, associé à une ligne réceptrice, reçoit le signal de commande (COM), en provenance du terminal réel associé à l'autre ligne, et inhibe (INH) le terminal réel associé à ladite ligne réceptrice. Le terminal réel inhibé de la ligne réceptrice n'est alors plus en mesure d'envoyer un signal de commande (COM) tant que l'autre ligne émet. Selon l'invention, deux lignes ne peuvent émettre en même temps et la commutation du dispositif de transmission est rapide.

## Description

L'invention concerne un dispositif de transmission de données entre deux lignes à même de transmettre des données numériques dont les niveaux logiques correspondent à un état actif et à un état de repos de chaque ligne au moyen d'un module d'interface effectuant la liaison entre les lignes.

L'invention concerne aussi une méthode pour transmettre des données entre deux lignes. Le dispositif décrit est particulièrement avantageux pour assurer la communication de données entre deux lignes ayant des potentiels de référence différents.

Un tel dispositif est décrit dans la demande de brevet européen EP 0 785 646. Le dispositif proposé comporte un module d'interface qui réalise une adaptation systématique du niveau logique de la donnée transmise aux caractéristiques de la ligne réceptrice au moyen de dispositifs de contrôle et de dispositifs de gestion associés à chaque ligne. Le dispositif de gestion dédié à une première ligne comporte des moyens pour bloquer le dispositif de gestion dédié à la deuxième ligne. Ce blocage du dispositif de gestion de la deuxième ligne empêche la deuxième ligne d'agir en tant qu'émetteur tant que le dispositif de gestion qui lui est dédié n'a pas été débloqué par le dispositif de gestion de la première ligne. Le dispositif de transmission proposé par l'art antérieur induit donc un délai pendant lequel la ligne, qui vient de recevoir une donnée, ne peut envoyer de données à son tour et donc répondre.

L'invention a pour but de remédier à cet inconvénient en proposant un dispositif de transmission de données entre deux lignes qui autorise une ligne, qui aurait reçu une donnée en provenance d'une autre ligne, à renvoyer, à son tour, une donnée quasi immédiatement.

Selon l'invention, le module d'interface d'un dispositif de transmission de données tel que décrit dans le paragraphe introductif comporte un terminal réel et un terminal virtuel associés à chacune des lignes,
- chaque terminal réel est muni de moyens pour reproduire l'état de la ligne à laquelle il est dédié et réciproquement contrôler l'état de la ligne et est muni de moyens de commande pour contrôler l'état du terminal virtuel associé à l'autre ligne,
- chaque terminal virtuel est muni de moyens pour lui permettre de se mettre dans un état dit actif lorsque l'autre ligne doit émettre une donnée et de se mettre dans un état dit passif sinon, de moyens pour contrôler l'état du terminal réel associé, et de moyens pour inhiber le fonctionnement des moyens de commande du terminal réel associé si et seulement si le terminal virtuel est à l'état actif.

Le module d'interface du dispositif proposé permet, au moyen des terminaux virtuels associés à chaque ligne, de définir à un instant donné le caractère récepteur ou non de la ligne associée. Les terminaux virtuels permettent d'empêcher les deux lignes d'émettre en même temps. L'association des terminaux virtuel et réel associés à une première ligne contrôle le terminal virtuel associé à la deuxième ligne. Ainsi le contrôle de l'état d'un terminal virtuel associé à une ligne se fait par l'autre ligne. Une ligne émettrice peut donc empêcher l'autre ligne d'envoyer des données pendant qu'elle émet. Ce blocage est immédiatement interrompu lorsque la ligne émettrice cesse d'émettre des données. La deuxième ligne est alors instantanément en mesure d'émettre à son tour et de répondre. Un avantage de l'invention est une commutation rapide du module d'interface qui, contrairement à celui du dispositif de l'art antérieur, n'impose pas de délai entre l'émission de données successives par chacune des lignes.

L'invention concerne aussi une méthode de transmission de données entre deux lignes à même de transmettre des données numériques, dont des niveaux logiques correspondent à un état actif et à un état de repos desdites lignes, au moyen d'un module d'interface effectuant la liaison entre les lignes comportant un terminal réel et un terminal virtuel associés à chacune des lignes, comportant les étapes suivantes pour la transmission d'une donnée d'une ligne émettrice à une ligne réceptrice:
- reproduction par le terminal réel associé à la ligne émettrice de l'état de ladite ligne,
- mise à l'état actif du terminal virtuel associé à la ligne réceptrice,
- contrôle du terminal réel associé à la ligne réceptrice par le terminal virtuel associé,
- transmission de la donnée sur la ligne réceptrice par le terminal réel associé à ladite ligne.

L'invention sera mieux comprise à la lumière de la description suivante de quelques modes de réalisation, faite à titre d'exemple et en regard des dessins annexés, dans lesquels:
- la figure 1 est un schéma fonctionnel d'un dispositif de transmission de données suivant l'invention,
- la figure 2 est schéma électrique d'un exemple de réalisation d'un dispositif de transmission selon l'invention, et
- la figure 3 est un schéma électrique d'un autre exemple de réalisation d'un dispositif de transmission selon l'invention.

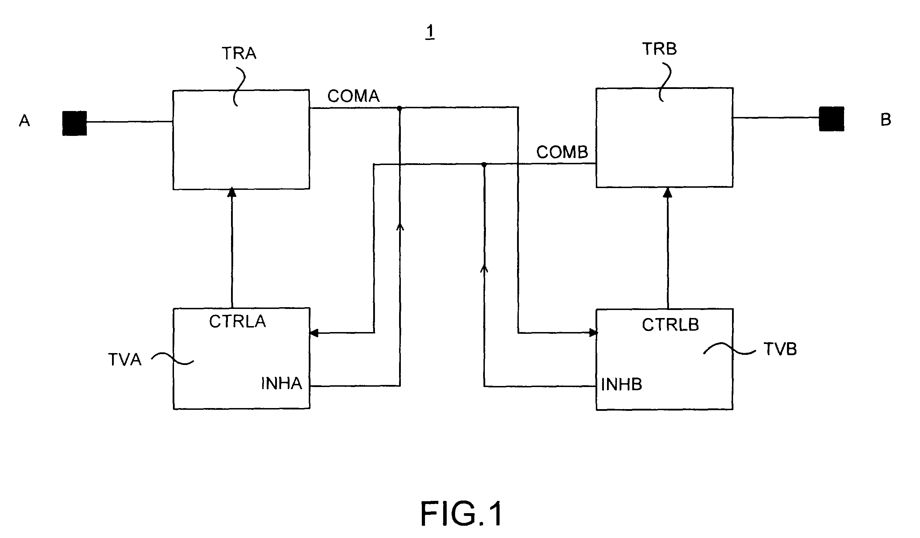

Un schéma fonctionnel d'un dispositif de transmission de données 1 suivant l'invention est présenté en figure 1. Ce dispositif de transmission 1 assure l'interface pour la communication de données entre deux lignes A et B. Chaque ligne peut être dans un premier état, dit actif, lorsqu'une donnée est transmise sur la ligne ou peut être dans un deuxième état, dit de repos, lorsque la ligne ne transmet aucune donnée, ce qui correspond à un état où la ligne peut recevoir une donnée de l'autre ligne ou émettre une donnée vers l'autre ligne. Le dispositif de transmission 1 comporte deux terminaux réels TRA, TRB, respectivement associés aux lignes A et B, et deux terminaux virtuels TVA, TVB, respectivement associés aux lignes A et B.

Chaque terminal réel TRA, TRB est muni de moyens pour contrôler l'état de ladite ligne A, B et réciproquement pour adopter l'état de ladite ligne. Dans le schéma de réalisation proposé en figure 1, les terminaux réels TRA et TRB sont chacun connectés à leur ligne respective. Un terminal réel est donc à un état dit actif lorsque la ligne qui lui est associée est à l'état actif et est à un état dit passif lorsque la ligne est à l'état de repos. De façon symétrique, la ligne est mise à l'état actif lorsque le terminal réel est mis à l'état actif et la ligne est mise à l'état de repos lorsque le terminal réel est mis à l'état passif. Chaque terminal réel TRA, TRB est aussi muni de moyens de commande pour lui permettre d'envoyer un signal de commande COMA, COMB au terminal virtuel associé à l'autre ligne pour asservir l'état du terminal virtuel.

Chaque terminal virtuel TVA, TVB dédié à une ligne comporte des moyens pour recevoir le signal de commande COMB, COMA que le terminal réel associé à l'autre ligne est à même d'émettre. En fonction de la valeur de ce signal, le terminal virtuel considéré se met dans un état actif lorsque la ligne à laquelle il est dédié doit recevoir une donnée, et dans un état passif sinon. L'état d'un terminal virtuel est ainsi fonction du signal de commande reçu depuis le terminal réel associé à l'autre ligne. Un terminal virtuel est muni, en outre, de moyens CTRLA, CTRLB pour contrôler l'état de son terminal réel associé et par conséquent l'état de la ligne associée. Chaque terminal virtuel TVA, TVB est aussi muni de moyens d'inhibition INHA, INHB pour inhiber les moyens de commande du terminal réel associé et de ce fait l'empêcher d'émettre le signal de commande COM. Dans un mode de réalisation particulier de l'invention, les moyens d'inhibition INH sont activés uniquement dans le cas où le terminal virtuel est à l'état actif, c'est-à-dire dans le cas où la ligne associée doit recevoir une donnée en provenance de l'autre ligne. Ainsi, dans ce mode de réalisation de l'invention, une ligne ne peut émettre lorsqu'elle reçoit déjà une donnée en provenance de l'autre ligne.

Le fonctionnement des différents terminaux du mode de réalisation de l'invention présenté en figure 1 est expliqué comme suit. On considère l'émission d'une donnée de la ligne A, ligne émettrice, vers la ligne B, ligne réceptrice. La ligne A, émettrice d'une donnée, est à l'état actif. Le terminal réel TRA qui lui est associé est donc lui aussi à l'état actif. Pour transmettre la donnée, les moyens de commande du terminal réel TRA envoient le signal de commande COMA au terminal virtuel associé à la ligne réceptrice B. Ce signal de commande COMA est envoyé uniquement dans le cas où le fonctionnement des moyens de commande n'est pas inhibé par les moyens d'inhibition INHA du terminal virtuel associé TVA, c'est-à-dire, comme précisé auparavant, dans le cas où la ligne émettrice A ne doit pas déjà, à cet instant, recevoir une donnée de l'autre ligne B. Les lignes A et B ne peuvent donc émettre en même temps. Ce signal de commande COMA contrôle l'état du terminal virtuel TVB associé à l'autre ligne et, dans ce mode de réalisation de l'invention, l'astreint à l'état actif. Les moyens de contrôle CTRLB du terminal virtuel TVB associé à la ligne B placent à l'état actif le terminal réel TRB et la ligne réceptrice B, ce qui assure la transmission de la donnée. Les moyens de commande du terminal réel TRB sont alors à même d'envoyer le signal de commande COMB au terminal virtuel TVA. Cependant, le terminal virtuel TVB étant à l'état actif, ses moyens d'inhibition INHB sont activés et inhibent le fonctionnement de ces moyens de commande du terminal réel associé TRB. Ceci empêche la ligne réceptrice B d'envoyer une donnée à la ligne A tant que la ligne A émet.

Lorsque la ligne émettrice A a fini d'émettre, elle est à nouveau à l'état de repos et par conséquent le terminal réel TRA associé se met à l'état passif. Le terminal réel TRA n'émet alors plus le signal de commande COMA qui maintenait à l'état actif le terminal virtuel TVB. Le terminal virtuel TVB est à nouveau à l'état passif et par conséquent le terminal réel TRB aussi et la ligne B revient à l'état de repos. Les moyens d'inhibition INHB du terminal virtuel TVB sont désactivés et n'inhibent plus les moyens de commande du terminal réel TRB. La ligne B peut alors à son tour immédiatement émettre une donnée et répondre. La commutation d'un dispositif de transmission selon l'invention est très rapide et une ligne peut envoyer une donnée à une autre ligne à tout instant si celle-ci n'émet pas de donnée à cet instant.

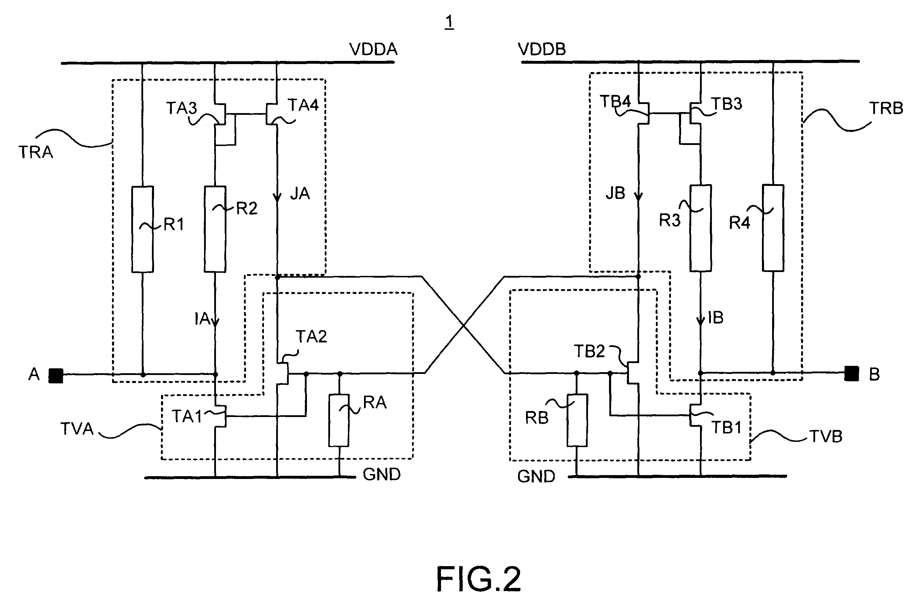

Un schéma électrique d'un mode de réalisation d'un dispositif de transmission 1 selon l'invention est présenté en figure 2. Le dispositif de transmission 1 assure l'interface pour la communication bidirectionnelle de données entre la ligne A et la ligne B distincte. Chaque ligne est à même de transmettre des données numériques dont les niveaux logiques correspondent à des potentiels de référence de ladite ligne. Dans ce mode de réalisation, une ligne transmettant une donnée est à l'état actif et est portée à un potentiel de référence nul. Ainsi lorsque la ligne A transmet une donnée, son potentiel est placé à zéro et de même lorsque la ligne B transmet une donnée, son potentiel est placé à zéro. Lorsqu'une ligne ne transmet pas de donnée, ladite ligne est à l'état de repos et est placée à un potentiel de référence positif VDD. Ainsi, les lignes A et B sont à l'état de repos lorsque lesdites lignes sont placées aux potentiels respectifs VDDA et VDDB.

Le dispositif de transmission 1 comporte des terminaux réels TRA, TRB et des terminaux virtuels TVA, TVB associés à chaque ligne A et B comme le montre la figure 2. Dans ce mode de réalisation de l'invention, le terminal réel TRA comporte une première résistance R1, une deuxième résistance R2, un premier transistor TA3 et un deuxième transistor TA4. La première résistance R1 est disposée entre une borne de référence de potentiel VDDA et la ligne A. La deuxième résistance R2 est placée entre la ligne A et le premier transistor TA3. Les premier et deuxième transistors TA3, TA4 sont connectés à la borne de référence de potentiel VDDA et forment un miroir de courant {TA3, TA4}. De la même façon, le terminal réel TRB comporte une troisième résistance R3, une quatrième résistance R4, un troisième transistor TB3 et un quatrième transistor TB4 connectés de façon symétrique aux éléments du terminal réel TRA. Le terminal virtuel TVA comporte un cinquième transistor TA1, un sixième transistor TA2 et une cinquième résistance RA. Le cinquième transistor TA1 est disposé entre la ligne A et une borne de référence de potentiel GND. Le sixième transistor TA2 est, lui, disposé entre la borne de référence de potentiel GND et le deuxième transistor TA4 du terminal réel TRA. On considère, dans ce mode de réalisation et dans la suite, que les transistors utilisés sont de type MOS et que la grille de chaque transistor est, par la suite, qualifiée de borne de contrôle. Des transistors bipolaires, dont les bases constitueraient les bornes de contrôle, peuvent leur être substitués. Les bornes de contrôle du cinquième transistor TA1 et du sixième transistor TA2 sont reliées à une borne de la cinquième résistance RA, dont une autre borne est reliée à la borne de référence de potentiel GND. De le même façon que pour le terminal virtuel TVA, le terminal virtuel TVB comporte un septième transistor TB1, un huitième transistor TB2 et une sixième résistance RB connectés entre eux de manière symétrique aux éléments du terminal virtuel TVA.

Le terminal réel TRA est dans un état actif lorsque le premier transistor TA3 et le deuxième transistor TA4 sont passants et sont respectivement parcourus par des courants IA, JA. Le terminal réel TRA est dans un état passif lorsque les premier et deuxième transistors TA3, TA4 sont bloqués et qu'aucun courant ne les parcourt. Le terminal virtuel TVA est dans un état actif lorsque le cinquième transistor TA1 et le sixième transistor TA2 sont passants et est dans un état passif lorsque lesdits cinquième et sixième transistors TA1 et TA2 sont bloqués. Une description symétrique est aussi valable pour les terminaux réel et virtuel associés à la ligne B.

On considère qu'initialement aucune des lignes ne transmet de donnée. Les lignes A et B sont à l'état de repos et sont respectivement aux potentiels VDDA et VDDB. Le courant IA qui traverse la deuxième résistance R2 est nul, et le courant JA que le miroir de courant {TA3, TA4} est à même de générer dans le deuxième transistor TA4 est par conséquent nul aussi. De même, les courants IB et JB sont nuls. La cinquième résistance RA, qui connecte les bornes de contrôle des cinquième et sixième transistors TA1 et TA2 à la borne de référence de potentiel GND, maintient lesdits cinquième et sixième transistors TA1 et TA2 bloqués. De façon symétrique, les septième et huitième transistors TB1, TB2 sont bloqués. Ainsi, initialement, les terminaux réels TRA, TRB et les terminaux virtuels TVA, TVB sont à l'état passif.

Si la ligne A émet une donnée vers la ligne B, le potentiel de la ligne émettrice A est placé à zéro et ladite ligne passe de l'état initial passif à l'état actif. Le premier transistor TA3 devient passant et un courant IA non nul parcourt la deuxième résistance R2. Le miroir de courant {TA3, TA4} génère dans le deuxième transistor TA4 un courant JA non nul, fonction de IA. Ce courant JA est le signal de commande COMA que le terminal réel TRA transmet au terminal virtuel TVB associé à la ligne B. Ainsi, dans ce mode de réalisation, les moyens de commande du terminal réel A sont formés par le miroir de courant {TA3, TA4}. Par ailleurs, les moyens d'inhibition INHA du terminal virtuel TVA sont formés par le sixième transistor TA2. Ces moyens d'inhibition sont activés lorsque le terminal virtuel TVA est à l'état actif, c'est-à-dire lorsque le sixième transistor TA2 est passant. En effet, lorsque ce sixième transistor TA2 est passant, il dérive entièrement le courant JA et par conséquent le signal COMA transmis au terminal virtuel TVB a une valeur nulle. Dans l'hypothèse précédente, les cinquième et sixième transistors TA1 et TA2 restent bloqués et le terminal virtuel TVA reste à l'état passif. Le sixième transistor TA2 ne dérive pas le courant JA et ce courant JA est transmis au terminal virtuel TVB. Ce courant JA rend les septième et huitième transistors TB1 et TB2 passants. Dans un mode de réalisation avantageux de l'invention, les dimensions du huitième transistor TB2 sont très supérieures à celles du septième transistor TB1 de sorte que le huitième transistor TB2 commute avant le septième transistor TB1 et devient passant avant le septième transistor TB1. Ceci permet de s'assurer que le courant JB qui pourrait apparaître est forcément dérivé dans le huitième transistor TB2. Le septième transistor TB1, qui forme les moyens de contrôle CTRLB du terminal virtuel TVB, génère un courant IB dans le quatrième transistor TB3 qui devient passant et place à zéro le potentiel de la ligne B. Un courant JB prend naissance dans le cinquième transistor TB4. Ce courant JB est le signal de commande COMB que le terminal réel TRB pourrait envoyer au terminal virtuel TVA. Cependant le huitième transistor TB2, qui, dans ce mode de réalisation de l'invention, appartient aux moyens d'inhibition du terminal virtuel TVB, est passant et dérive ce courant JB. Les moyens d'inhibition du terminal virtuel TVB sont activés et empêchent le terminal réel TRB d'envoyer le signal de commande COMB au terminal virtuel TVA. Comme il a été remarqué précédemment, un terminal recevant une donnée ne peut émettre de signal de commande. Ainsi dans ce mode de réalisation, la donnée est transmise à la ligne B et cette ligne B ne peut envoyer de données à son tour tant que la ligne A émet. En effet, à l'instant où la ligne A finit d'émettre, la ligne est à nouveau placée au potentiel VDDA. Les courants IA et JA deviennent nuls, et de ce fait les septième et huitième transistors TB1 et TB2 se bloquent. Le potentiel de la ligne B est placé à VDDB. Le courant JB n'est plus dérivé par le huitième transistor TB2, qui commute avant le septième transistor TB1, et le courant JB, qui a pu apparaître pendant un court instant, est consommé dans la cinquième résistance RA jusqu'au moment où il devient nul lui aussi. Le courant IB devient nul. Le dispositif est alors de retour à l'état de repos avec les terminaux réels et virtuels à l'état passif. Le système est revenu à l'état initial et la ligne B est immédiatement en mesure d'émettre une donnée à son tour et de répondre. La structure du dispositif 1 étant symétrique, une telle description est valable pour l'émission d'une donnée de le ligne B vers la ligne A en inversant les indices A et B.

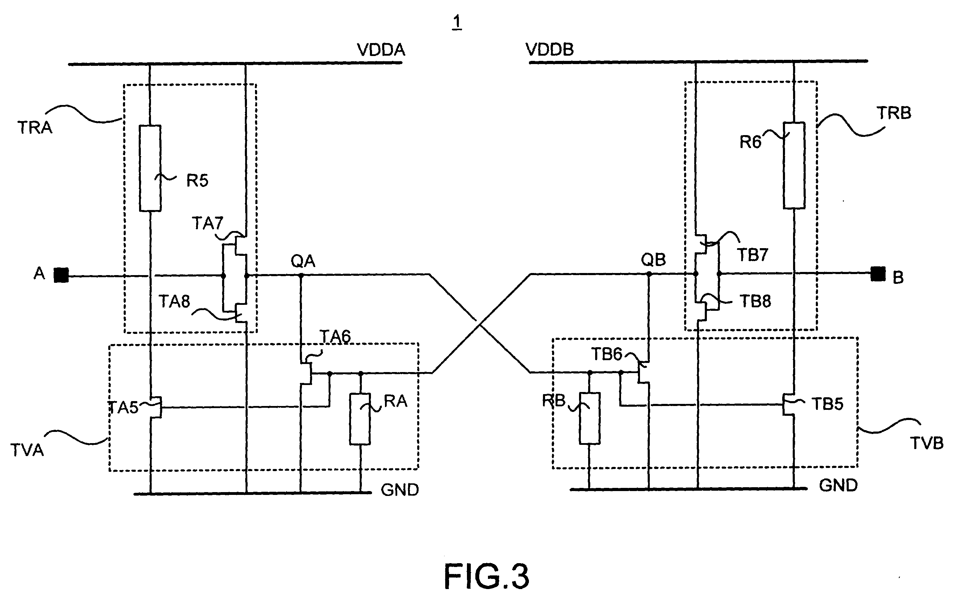

Un autre mode de réalisation d'un dispositif de transmission 1 suivant l'invention est proposé en figure 3. De même que pour le dispositif présenté en figure 2, une ligne transmettant une donnée est placée à un potentiel nul et une ligne à l'état de repos est placée à un potentiel VDD. Dans ce mode de réalisation, le dispositif de transmission 1 comporte des terminaux réels TRA, TRB et des terminaux virtuels TVA, TVB associés à chacune des lignes A et B. Le terminal réel TRA comporte une septième résistance R5, un neuvième transistor TA7 et un dixième transistor TA8. La septième résistance R5 est disposée entre la ligne A et la borne de référence de potentiel VDDA. Les neuvième et dixième transistors TA7, TA8 forment un inverseur {TA7, TA8} permettant l'inversion du potentiel de la ligne A, laquelle est reliée à une entrée dudit inverseur {TA7, TA8}. De façon symétrique, le terminal réel TRB comporte une huitième résistance R6, un onzième transistor TB7 et un douzième transistor TB8. Les onzième et douzième transistors TB7 et TB8 formant un inverseur {TB7, TB8} pour inverser le potentiel de la ligne B, laquelle est reliée à une entrée dudit inverseur {TB7, TB8}. Le terminal virtuel TVA comporte un treizième transistor TA5, un quatorzième transistor TA6 et une neuvième résistance R7. Le treizième transistor TA5 est disposé entre la ligne A et la borne de référence de potentiel GND. Le quatorzième transistor TA6 est disposé entre un noeud QA, matérialisé par une sortie de l'inverseur {TA7, TA8}, et la borne de référence de potentiel GND. Les treizième et quatorzième transistors TA5 et TA6 sont reliés par leurs bornes de contrôle respectives. La neuvième résistance R7 est placée entre les bornes de contrôle des treizième et quatorzième transistors TA5 et TA6 et la borne de référence de potentiel GND.

Le terminal réel TRA est dans un état actif lorsque le neuvième transistor TA7 est passant tandis que le dixième transistor TA8 est bloqué. Le terminal réel TRA est dans un état passif lorsque le neuvième transistor TA7 est bloqué tandis que le dixième transistor TA8 est passant. Le terminal virtuel TVA est dans un état actif lorsque les treizième et quatorzième transistors TA5 et TA6 sont passants et est dans un état passif lorsque les treizième et quatorzième transistors TA5 et TA6 sont bloqués. Une description symétrique est aussi valable pour les terminaux réel TRB et virtuel TVB associés à la ligne B.

On considère qu'initialement aucune des lignes ne transmet une donnée. Les lignes A et B sont à l'état de repos et sont respectivement placées aux potentiels VDDA et VDDB. Le neuvième transistor TA7 est bloqué, le dixième transistor TA8 est passant et le terminal TRA est à l'état passif. De même, la neuvième résistance R7 maintient les bornes de contrôle des treizième et quatorzième transistors TA5 et TA6 au potentiel de référence GND. Les treizième et quatorzième transistors TA5 et TA6 sont bloqués et le terminal virtuel TVA est à l'état passif. Une description symétrique est valable pour les terminaux réel TRB et virtuel TVB associés à la ligne B. Ainsi, initialement, les terminaux réels TRA, TRB et les terminaux virtuels TVA, TVB sont à l'état passif.

Supposons dans la suite que la ligne A émet une donnée vers la ligne B. Le potentiel de la ligne émettrice A est placé à zéro et ladite ligne A passe de l'état passif initial à l'état actif. Le noeud QA est alors placé au potentiel VDDA correspondant à un niveau logique 1 dudit noeud QA. Le potentiel du noeud QA est le signal de commande COMA que le terminal réel TRA transmet au terminal virtuel TVB associé à la ligne B. Ainsi, dans ce mode de réalisation, les moyens de commande du terminal réel A sont formés par l'inverseur {TA7, TA8} et le signal de commande COMA, COMB apparaît sous la forme d'un potentiel et non plus sous la forme d'un courant JA ou JB du mode de réalisation présenté en figure 1. L'utilisation de signaux de commande de cette forme est avantageuse en ce qu'elle assure une commutation plus rapide des terminaux que lors de l'utilisation de signaux de courants. Par ailleurs, les moyens d'inhibition INHA du terminal virtuel TVA sont formés par le quatorzième transistor TA6. Ces moyens d'inhibition sont activés lorsque le terminal virtuel TVA est à l'état actif, c'est-à-dire lorsque le quatorzième transistor TA6 est passant. En effet lorsque le quatorzième transistor TA6 est passant, il place a zéro le potentiel du noeud QA. Dans ce cas le signal COMA ne pourrait être transmis au terminal virtuel TVB. Dans l'hypothèse du départ, le quatorzième transistor TA6 reste bloqué et le terminal virtuel TVA reste à l'état passif. Le noeud QA est donc au niveau logique 1 et son potentiel rend les quinzième et seizième transistors TB5 et TB6 passants. Le quinzième transistor TB5 devenu passant et qui forme les moyens de contrôle du terminal virtuel TVB, place à zéro le potentiel de la ligne B. Dans un mode de réalisation avantageux de l'invention, les caractéristiques des onzième et seizième transistors TB6 et TB7 sont choisies de façon telle que le seul le seizième transistor TB6 contrôle le potentiel d'un noeud constitué par la sortie de l'inverseur {TB7, TB8}. Le seizième transistor TB6, qui appartient aux moyens d'inhibition INHB du terminal virtuel TVB, est passant et place à zéro le potentiel du noeud QB et, de fait, inhibe les moyens de commande du terminal réel TRB. En effet l'inverseur {TB7, TB8} du terminal réel TRB ne peut plus placer au niveau logique 1 le potentiel du noeud QB, maintenu au niveau logique zéro par le seizième transistor TB6. L'inverseur {TB7, TB8), qui forme les moyens de commande du terminal réel TRB, ne peut plus émettre le signal de commande COMB. Lorsque la ligne A n'émet plus, son potentiel est à nouveau placé à VDDA. Le potentiel du noeud QA se met à zéro et, grâce à la résistance RB connectée à la borne de référence de potentiel GND, les quinzième et seizième transistors TB5 et TB6 se bloquent. Le terminal virtuel TVB est de retour à l'état passif, ses moyens d'inhibition INHB sont désactivés. Le transistor TB5 devenu bloquant, la ligne B est de retour au potentiel VDDB et le potentiel du noeud QB est placé à zéro. Les terminaux sont de retour à l'état passif et le système est revenu à l'état initial et la ligne B est immédiatement en mesure d'émettre une donnée à son tour et de répondre. Le dispositif 1 étant symétrique, une telle description est valable pour l'émission d'une donnée de le ligne B vers la ligne A en inversant les indices A et B.

Les dispositifs de transmissions proposés suivant l'invention n'imposent pas de délai entre la réception d'une donnée par une ligne et la réponse que cette même ligne pourrait renvoyer vers la ligne émettrice.

## Revendications

1. Dispositif de transmission de données entre deux lignes à même de transmettre des données numériques dont les niveaux logiques correspondent à un état actif et à un état de repos de chaque ligne au moyen d'un module d'interface effectuant la liaison entre les lignes,
caractérisé en ce que
le module d'interface comporte un terminal réel et un terminal virtuel associés à chacune des lignes,
- chaque terminal réel est muni de moyens pour adopter l'état de la ligne à laquelle il est dédié et réciproquement contrôler l'état de ladite ligne et est muni de moyens de commande pour contrôler l'état du terminal virtuel associé à l'autre ligne,
- chaque terminal virtuel est muni de moyens pour lui permettre de se mettre dans un état dit actif lorsque la ligne, à laquelle il n'est pas associé, doit émettre une donnée et de se mettre dans un état dit passif sinon, de moyens pour contrôler l'état du terminal réel auquel il est associé, et de moyens pour inhiber le fonctionnement des moyens de commande dudit terminal réel si et seulement si le terminal virtuel est à l'état actif.

2. Dispositif de transmission de données selon la revendication 1, caractérisé en ce que les moyens de commande d'un terminal réel associé à une ligne sont destinés à générer un signal de commande, le terminal virtuel associé à l'autre ligne étant à l'état actif lorsque la valeur du signal de commande est supérieure ou égale à une valeur prédéterminée et à l'état passif sinon.

3. Dispositif de transmission de données selon la revendication 2, caractérisé en ce que les moyens d'inhibition d'un terminal virtuel inhibent le fonctionnement des moyens de commande du terminal réel associé en modifiant la valeur du signal de commande.

4. Dispositif de transmission de données selon la revendication 2, caractérisé en ce que chaque terminal virtuel associé à une ligne comporte un transistor dont la mise en conduction permet audit terminal virtuel d'inhiber le fonctionnement des moyens de commande du terminal réel associé, ledit transistor étant destiné à recevoir le signal de commande depuis le terminal réel associé à l'autre ligne.

5. Méthode de transmission de données entre deux lignes à même de transmettre des données numériques, dont des niveaux logiques correspondent à un état actif et à un état de repos de ladite ligne, au moyen d'un module d'interface effectuant la liaison entre les lignes comportant un terminal réel et un terminal virtuel associés à chacune des lignes, comportant les étapes suivantes pour la transmission d'une donnée d'une ligne émettrice à une ligne réceptrice:
- reproduction par le terminal réel associé à la ligne émettrice de l'état de ladite ligne,
- mise à l'état actif du terminal virtuel associé à la ligne réceptrice,
- contrôle du terminal réel associé à la ligne réceptrice par le terminal virtuel associé,
- transmission de la donnée sur la ligne réceptrice par le terminal réel associé à ladite ligne.
